(19) Europäisches Patentamt
European Patent Office
Office européen des brevets

(11) **EP 1 279 918 B1**

(12) **EUROPÄISCHE PATENTSCHRIFT**

(45) Veröffentlichungstag und Bekanntmachung des Hinweises auf die Patenterteilung:
**29.12.2010  Patentblatt 2010/52**

(51) Int Cl.:
*G01B 5/008* (2006.01)     *G01B 5/012* (2006.01)

(21) Anmeldenummer: **02015425.8**

(22) Anmeldetag: **11.07.2002**

(54) **Verfahren zum Diagnostizieren von Schäden in einem messenden Tastkopf eines Koordinatenmessgeräts**

Method for diagnosing damages in a measuring head of a coordinate measuring machine

Procédé pour diagnostiquer des dommages d'une tête de mesure d'une machine de mesure de coordonnées

(84) Benannte Vertragsstaaten:
**DE FR GB IT**

(30) Priorität: **27.07.2001  DE 10136559**

(43) Veröffentlichungstag der Anmeldung:
**29.01.2003  Patentblatt 2003/05**

(73) Patentinhaber: **Carl Zeiss Industrielle Messtechnik GmbH**
**73447 Oberkochen (DE)**

(72) Erfinder: **Jenisch, Walter**
**89520 Heidenheim (DE)**

(74) Vertreter: **Köllner, Malte et al**
**Köllner & Partner**
**Patentanwälte**
**Vogelweidstrasse 8**
**60596 Frankfurt am Main (DE)**

(56) Entgegenhaltungen:
**EP-A- 0 693 669     DE-A- 4 001 433**
**DE-A- 4 436 507     DE-A- 19 518 268**

**Beschreibung**

Zentrale Komponenten eines jeden Koordinatenmessgeräts (KMG) sind ein Taststift und ein Tastkopf. Der Taststift ist üblicherweise über eine Taststiftwechselhalterung auswechselbar an der Mechanik des Tastkopfes befestigt.

Es gibt prinzipiell zwei Sorten von Tastköpfen: schaltende und messende Tastköpfe.

Ein schaltender Tastkopf zeichnet sich dadurch aus, dass er ein elektrisches Signal in dem Moment erzeugt, in dem die Tastkugel die Oberfläche eines Werkstücks berührt.

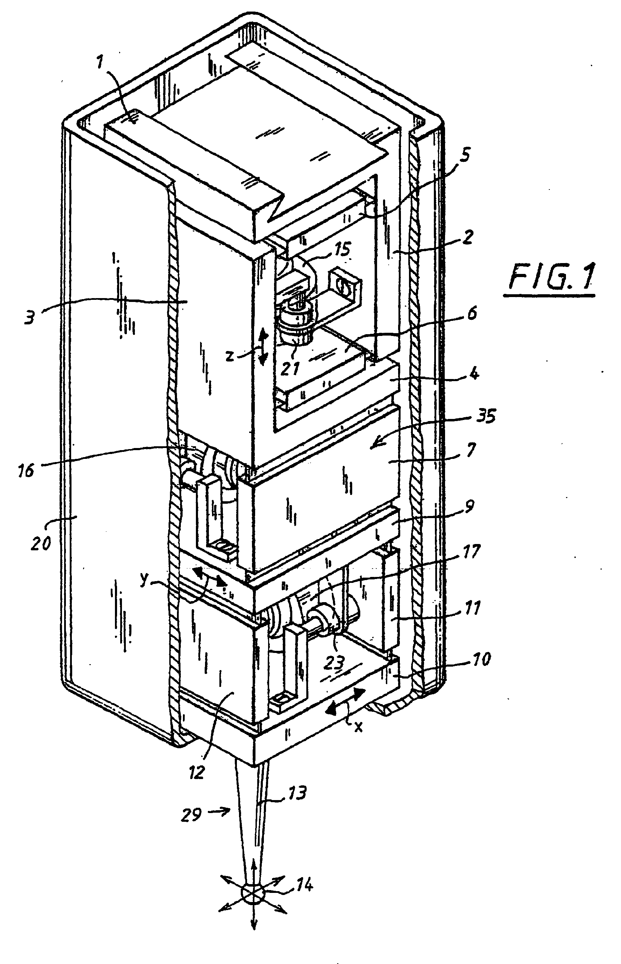

Ein messender Tastkopf gestattet die Auslenkung des Taststiftes in den drei räumlichen Koordinatenrichtungen, wobei die Auslenkung in den drei Koordinatenrichtungen über Sensoren gemessen wird. Damit der Taststift in den drei Koordinatenrichtungen ausgelenkt werden kann, befinden sich im Inneren Führungen, wie beispielsweise Blattfederparallelogramme (siehe Fig. 1 und die zugehörige Beschreibung weiter unten). Außerdem weisen messende Tastköpfe krafterzeugende Einrichtungen auf, wie beispielsweise Federn, die bei einer Auslenkung des Taststiftes aus seiner Ruhelage eine der Auslenkung entgegengesetzte Kraft erzeugen.

Messende Tastköpfe sind äußerst empfindlich. Sie sind an KMG selten vollständig kollisionsgeschützt. Im Falle einer Kollision von einem mit dem Tastkopf verbunden Taststift und einem Werkstück wird im günstigsten Fall der Taststift oder die Tasterkonfiguration aus der Taststiftwechselhalterung gerissen und teilweise beschädigt, der Tastkopf hingegen bleibt unbeschädigt.

Im schlimmsten Fall, wenn eine Kollision bei Maximalgeschwindigkeit in z-Richtung erfolgt, werden Bauteile im Inneren des Tastkopfes zerstört. Die Funktion des Tastkopfes ist dann meistens so stark eingeschränkt, das ein weiteres Messen nicht mehr möglich und ein Serviceeinsatz erforderlich ist.

Oftmals jedoch entstehen Kollisionen, bei denen der Anwender nicht sofort erkennen kann, ob am Tastkopf oder der Maschine ein Schaden entstanden ist, der die Messgenauigkeit beeinträchtigt.

Erst viel später werden, vielleicht bei sich ändernden Messaufgaben, Ungenauigkeiten am KMG festgestellt. Die Ursachenfindung durch den Servicemitarbeiter ist dann sehr zeit- und kostenintensiv, da der Schaden und seine Ursache in Vergessenheit geraten sein kann.

DE 44 36 507 A1 beschreibt ein Verfahren zum Bestimmen der dynamischen Biegetensoren unterschiedlicher messender Tastköpfe eines Koordinatenmessgeräts. Die Biegetensoren beschreiben die elastische Nachgiebigkeit des gesamten Maschinenaufbaus. Die erhaltenen Biegetensoren werden für die Korrektur von Messwerten verwendet und können bzgl. Abweichungen voneinander verglichen werden.

Aufgabe der Erfindung ist es, ein Verfahren zum Diagnostizieren von Schäden in einem messenden Tastkopf eines Koordinatenmessgeräts, sowie ein Koordinatenmessgerät mit entsprechenden Mitteln, anzugeben.

Diese Aufgabe wird durch ein Verfahren und ein Koordinatenmessgerät gemäß den unabhängigen Ansprüchen 1 und 6 gelöst. Vorteilhafte Weiterbildungen des Verfahrens gemäß Anspruch 1 sind in den abhängigen Ansprüchen 2 bis 5 gekennzeichnet.

Durch eine Kollision können im Tastkopf oder im KMG Teile zu Bruch gehen, wenngleich alle Funktionen, oberflächlich betrachtet, weiterhin fehlerfrei arbeiten. Brechen können z.B. einzelne Gelenke bzw. Blattfedern eines der Federparallelogramme (siehe Fig. 1 weiter unten). Die Blattfedern sind in der Regel sehr dünn, z. B. mit einer Dicke von 80 μm. Brechen im Tastkopf einzelne Gelenke so ab, dass die Bewegungsfähigkeit des Tastkopfes erhalten bleibt, so ändert sich durch die reduzierte Steifigkeit das elastische Biegeverhalten, des Tastkopfs oder der Kombination aus Taststift und Tastkopf. Daher bietet das elastische Biegeverhalten bzw. die Biegematrix des Tastkopfs bzw. der Kombination aus Tastkopf und einem oder mehreren Taststiften eine Möglichkeit, Schäden am Tastkopf zu diagnostizieren.

Dazu muss zunächst die elastische Biegematrix des Tastkopfs oder des Tastkopfs in Kombination mit weiteren Komponenten im unbeschädigten Zustand an einem bestimmten KMG oder für verschiedene Typen von KMG bestimmt werden. Diese Biegematrix dient als Referenzmatrix.

Die weiteren Komponenten können ein Taststift oder eine ausgewählte Taststiftkombination sein, z.B. eine "Kontrolltasterkonfiguration" mit den Tasterlängen (X=200 / Y=0 / Z=200) mm. U. U. kann auch die Biegematrix des Tastkopfs i. V. m. dem Koordinatenmessgerät bestimmt werden.

Treten Probleme auf, so wird die elastische Biegematrix des Tastkopfs oder des Tastkopfs in Kombination mit den ausgewählten weiteren Komponenten im potentiell beschädigten Zustand bestimmt, und zwar entweder an dem ausgewählten KMG oder vorzugsweise am ausgewählten KMG-Typ. Anschließend wird die neu bestimmte Matrix mit der Referenzmatrix verglichen, wobei aus den Abweichungen auf Schäden am Tastkopf geschlossen wird.

Diese Messungen können durch Software automatisiert oder unterstützt werden, so dass automatisch die Abweichungen von der ursprünglichen Messung ermittelt und ausgegeben werden können.

Die statistische Schwankung des Biegeverhaltens, d. h. der einzelnen Werte der Biegematrix, liegt im Bereich von 1 bis 3%. Abweichungen der einzelnen Werte darüber hinaus, insbesondere von 10% oder mehr, deuten daher auf Schäden im Tastkopf hin.

Zu Eichzwecken wird prinzipiell jeder Taststift zusammen mit dem messenden Tastkopf vermessen. Zur Diagnose von Schäden am messenden Tastkopf reicht jedoch der Vergleich der Biegematritzen für den unbeschädigten und den potentiell beschädigten Tastkopf für eine einzige Taststiftkombination (z. B. (X=200 / Y=0 / Z=200) mm). Die Bestimmung der beiden Biegematrizen erfolgt dabei im Werk des Herstellers an ein und demselben KMG bzw. vorzugsweise an ein und demselben KMG-Typ.

Um die Biegematrix effizient bestimmen zu können, müssen Drehmomente auf die Kombination aus Taststift und Tastkopf übertragen werden. Dazu eignet sich besonders eine Taststiftkombination bzw. -konfiguration aus zwei Taststiften, einem in z-Richtung, d.h. nach "unten", und einem Taststift in x-Richtung, also seitlich, z.B. die Kombination (x=200 / y=0 / z=200) mm, bei der Drehmomente insbesondere auch über den x-Taststift in den Tastkopf eingeleitet werden können.

Aus den Abweichungen kann pauschal auf einen nicht näher zu analysierenden Schaden im Tastkopf geschlossen werden. Eine genaue Analyse, welcher Schaden im Inneren des Tastkopfs vorliegt, ist erstens schwierig und zweitens nicht entscheidend, da der Tastkopf im Falle der Diagnose eines Schadens ohnehin demontiert werden muss. Der genaue Schaden kann im demontierten Zustand leicht erkannt werden.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

Fig. 1    eine perspektivische Ansicht eines messenden Tast- kopfs im Aufriss; und

Fig. 2    eine schematische Darstellung einer Kalibrierkugel mit den teilweise eingezeichneten Antastpunkten.

Fig. 1 zeigt einen messenden Tastkopf in der perspektivischen Ansicht im Aufriss, wobei hierbei das Tastkopfgehäuse 20 aufgerissen wurde, um hierdurch das Innenleben des Tastkopfs darstellen zu können. Wie aus der Fig. 1 zu sehen ist, weist der Tastkopf einen Taststift 29 auf, der austauschbar an der beweglichen Tastkopfmechanik 35 des Tastkopfs befestigt ist. Der Taststift 29 weist einen in Fig. 1 nicht zu sehenden Taststiftteller 21 auf, an dem ein Stift 13 und eine Tastkugel 14 befestigt ist. Der Taststift 29 ist über eine Wechselhalterung an der restlichen Mechanik 35 des Tastkopfs austauschbar befestigt. Dazu ist die Wechselhalterung an der Platte 10 festgeschraubt. Die Platte 10 ist jeweils über Blattfedern mit den Teilen 11 und 12 verbunden, die ihrerseits wieder über Blattfedern mit der Platte 9 verbunden sind, so dass hierdurch ein Blattfederparallelogramm entsteht. Die Platte 10 und somit auch der Taststift 29 sind somit gegenüber der Platte 9 in Richtung des Pfeils X beweglich gelagert. Die Platte 9 ist in entsprechender Weise ebenfalls über Blattfedern und Teil 7 sowie ein entsprechendes, nicht zu sehendes Teil gegenüber dem Winkelstück 3, 4 beweglich gelagert, so dass der Taststift 29 auch in Richtung des Pfeils Y gegenüber dem Teil 4 beweglich gelagert ist. Um den Taststift 29 auch in Richtung des Pfeils Z auslenken zu können, ist die Platte 3 des Winkels 3, 4 ebenfalls über Blattfedern und die Teile 5, 6 gegenüber dem Teil 2 beweglich gelagert, das mittels einer Schwalbenschwanzführung 1 an einer beweglichen Mimik des Koordinatenmessgerätes befestigt wird. Hierdurch kann der Taststift in allen drei aufeinander senkrecht stehenden Messrichtungen gegenüber dem Tastkopfgehäuse 20 ausgelenkt werden. Die Auslenkung in den drei Raumrichtungen wird hierbei durch Tauchspulen 21, 23 ermittelt, wie dies beispielsweise in der EP 0 693 669 beschrieben ist. Zusätzlich weist der Tastkopf noch Tauchspulen 15, 16, 17 auf, über die sich die Messkraft, mit der die Tastkugel 14 gegen eine Werkstückoberfläche gepresst wird, einstellen lässt. Auch dies ist in der EP 0 693 669 näher erläutert.

Für eine Kombination aus einem Taststift und einem Tastkopf zusammen mit dem Biegeverhalten des Koordinatenmessgeräts wird die elastische Biegematrix bestimmt, die Messabweichung aufgrund der Tasterbiegung gemäß folgendem Zusammenhang beschreibt:

$$\vec{x}' \;=\; \vec{x} \;+\; N\vec{F} \qquad\qquad (1)$$

dabei ist der Vektor x' die Auslenkung der Tastkugel beim Antastvorgang, der Vektor x die Auslenkung, die von den Meßsystemen im messenden Tastkopf gemessen wird, die Matrix N die elastische Biegematrix und der Vektor F die zwischen Tastkugel und Werkstück aufgebaute Messkraft. N lässt sich allgemein schreiben als:

$$N \;=\; \begin{pmatrix} a_{11} & a_{21} & a_{31} \\ a_{12} & a_{22} & a_{32} \\ a_{13} & a_{23} & a_{33} \end{pmatrix} \qquad\qquad (2)$$

Möglichkeiten, die Biegematrix zu messen, sind im Detail in der Patentanmeldung DE 195 18 268 A1, insbesondere auf den Seiten 13 und 14, beschrieben.

Die Elemente der Biegematrix werden vorzugsweise durch Antastung einer Kalibrierkugel bestimmt. Denkbar ist auch die Messung an anderen Kalibrierobjekten, wie sie z.B. in der oben zitierten DE 195 18 268 A1 beschrieben werden. Während des Antastvorgangs wird die Messkraft variiert und die Veränderung der Messabweichung x' als Funktion der Messkraft F ermittelt. Vorzugsweise wird mit jeweils zwei Messkräften, 200 und 800 mN, gemessen. Die Steigung bzw. Ableitung von x' nach F ergibt direkt die Elemente der Biegematrix.

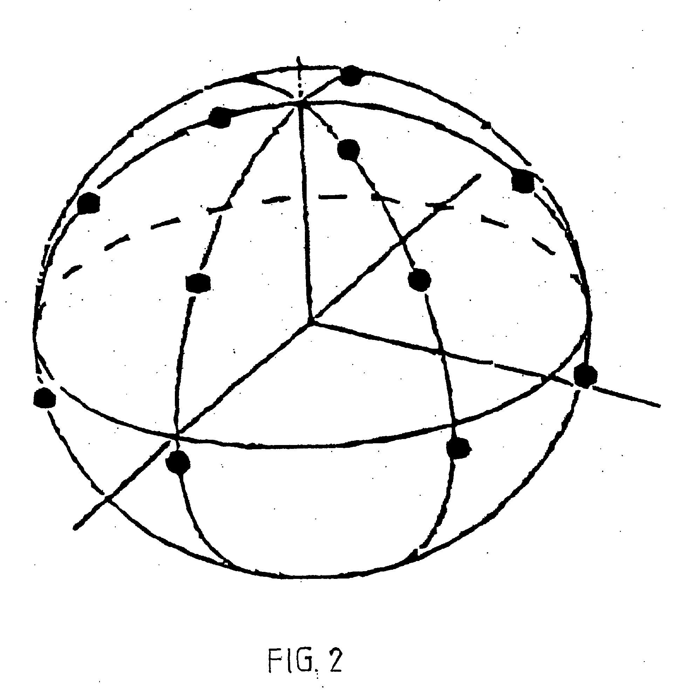

Vorzugsweise werden mindestens 14 Messpunkte an der Kalibrierkugel angetastet. Sinnvoll ist eine Anordnung von ca. 15 Antastpunkten, jeweils 5 auf drei Großkreisen, die sich im Nord- und Südpol der Kugel schneiden und jeweils um 60° versetzt angeordnet sind, wie es in Fig. 2 gezeigt ist. Dadurch wird die Lösung des linearen Gleichungssystems gemäß Gleichung (1) besonders stabil.

Bei der Kalibrierung an der Kugel muss der Tastkopf in allen drei Achsen ungeklemmt sein.

Das Biegeverhalten des KMG hängt von der Auslenkung der Träger des KMG in x-, y- und z-Richtung ab. Daher ist die Biegematrix prinzipiell ortsabhängig. Übliche KMG sind jedoch "biegekompensiert". Das Biegeverhalten des KMG wird dabei grundsätzlich vermessen. Das dann bekannte Biegeverhalten des KMG kann bei jeder Antastung, bei der Stärke und Richtung der Antastkraft bekannt sind, rechnerisch korrigiert werden. Nach dieser mathematischen Korrektur bleibt lediglich das Biegeverhalten von Tastkopf und Taststiftkombination übrig.

Vorzugsweise wird diese Schwierigkeit jedoch dadurch umgangen, dass der potentiell beschädigte Tastkopf an einem KMG desselben Typs in derselben räumlichen Auslenkung der Träger des KMG bestimmt wird, in der auch die Referenzmatrix bestimmt wurde.

Möchte man überdies die Biegematrix für den Tastkopf allein, ohne den Taststift ermitteln, so müssen zusätzlich die elastischen Biegeeigenschaften des Taststifts aus seinem mit Mitteln der Statik berechenbaren elastischen Verhalten berechnet und subtrahiert werden.

## Patentansprüche

1. Verfahren zum Diagnostizieren von Schäden in einem messenden Tastkopf eines Koordinatenmessgeräts,

   a) wobei die elastische Biegematrix des Tastkopfs oder des Tastkopfs in Kombination mit weiteren Komponenten im unbeschädigten Zustand bestimmt wird;
   **dadurch gekennzeichnet,**
   b) **dass** die elastische Biegematrix des Tastkopfs im potentiell beschädigten Zustand oder des Tastkopfs im potentiell beschädigten Zustand in Kombination mit weiteren Komponenten bestimmt wird; und
   c) **dass** die Werte der beiden bestimmten Biegematritzen miteinander verglichen werden, wobei aus den Abweichungen auf Schäden am Tastkopf geschlossen wird.

2. Verfahren nach dem vorhergehenden Anspruch,
   **dadurch gekennzeichnet,**
   **dass** die Biegematrix des Tastkopfs in Kombination mit mindestens einem Taststift bestimmt wird.

3. Verfahren nach dem vorhergehenden Anspruch,
   **dadurch gekennzeichnet,**
   **dass** der mindestens eine Taststift eine z-Komponente und eine x- oder $\gamma$-Komponente aufweist.

4. Verfahren nach einem der vorhergehenden Ansprüche,
   **dadurch gekennzeichnet,**
   **dass** die elastische Biegematrix im unbeschädigten Zustand für jeden Typ von Koordinatenmessgerät bestimmt wird.

5. Verfahren nach einem der vorhergehenden Ansprüche,
   **dadurch gekennzeichnet,**
   **dass** die elastische Biegematrix im unbeschädigten Zustand für jeden Tastkopf-Typ bestimmt wird.

6. Koordinatenmessgerät mit einem messenden Tastkopf

   a) mit Mitteln zum Bestimmen der elastischen Biegematrix des Tastkopfs oder des Tastkopfs in Kombination mit weiteren Komponenten;
   b) mit Mitteln zum Speichern einer ersten und einer zweiten bestimmten elastischen Biegematrix des Tastkopfs;
   c) mit Mitteln zum Vergleichen der Werte der beiden gespeicherten elastischen Biegematritzen; und

d) mit Mitteln zum Bewerten der Abweichungen zwischen den beiden gespeicherten elastischen Biegematritzen, wobei aus den Abweichungen auf Schäden am Tastkopf geschlossen wird.

**Claims**

1. Method for diagnosing damage in a measuring probe head of a coordinate measuring machine,

   a) the elastic bending matrix of the probe head or of the probe head in combination with further components being determined in the undamaged state; **characterized**
   b) **in that** the elastic bending matrix of the probe head in the potentially damaged state, or of the probe head in the potentially damaged state in combination with further components is determined; and
   c) **in that** the values of the two determined bending matrices are compared with one another, damage to the probe head being inferred from the deviations.

2. Method according to the preceding claim,
   **characterized**
   **in that** the bending matrix of the probe head is determined, in combination with at least one feeler.

3. Method according to the preceding claim,
   **characterized**
   **in that** the at least one feeler has a z-component and an x- or $\gamma$-component.

4. Method according to one of the preceding claims,
   **characterized**
   **in that** the elastic bending matrix is determined in the undamaged state for each type of coordinate measuring machine.

5. Method according to one of the preceding claims,
   **characterized**
   **in that** the elastic bending matrix is determined in the undamaged state for each type of probe head.

6. Coordinate measuring machine with a measuring probe head

   a) having means for determining the elastic bending matrix of the probe head or of the probe head in combination with further components;
   b) having means for storing a first and a second determined elastic bending matrix of the probe head;
   c) having means for comparing the values of the two stored elastic bending matrices; and
   d) having means for evaluating the deviations between the two stored elastic bending matrices, damage to the probe head being inferred from the deviations.

**Revendications**

1. Procédé de diagnostic de dommages à une tête de mesure d'un appareil de mesure de coordonnées,

   a) dans lequel la matrice flexible élastique de la tête de palpage ou de la tête de palpage combinée avec d'autres composants est déterminée à l'état non endommagé,
   **caractérisé en ce que**
   b) la matrice flexible élastique de la tête de palpage est déterminée dans un état potentiellement endommagé ou celle de la tête de palpage combinée avec d'autres composants est déterminée dans un état potentiellement endommagé et
   c) **en ce que** les valeurs des deux matrices flexibles ainsi déterminées sont comparées l'une à l'autre, les écarts permettant de conclure à la présence de dommages à la tête de palpage.

2. Procédé selon la revendication précédente, **caractérisé en ce que** la matrice flexible de la tête de palpage est déterminée en combinaison avec au moins une tige de palpage.

**3.** Procédé selon la revendication précédente, **caractérisé en ce que** la ou les tige(s) de palpage présente(nt) une composante z et une composante x ou une composante y.

**4.** Procédé selon l'une des revendications précédentes, **caractérisé en ce que** la matrice flexible élastique est déterminée à l'état non endommagé pour chaque type d'appareil de mesure de coordonnées.

**5.** Procédé selon l'une des revendications précédentes, **caractérisé en ce que** la matrice flexible élastique est déterminée à l'état non endommagé pour chaque type de tête de palpage.

**6.** Appareil de mesure de coordonnées présentant une tête de palpage utilisée pour la mesure et présentant

a) des moyens qui déterminent la matrice flexible élastique de la tête de palpage ou de la tête de palpage combinée avec d'autres composants,
b) des moyens qui conservent en mémoire une première et une deuxième matrice flexible élastique déterminée de la tête de palpage,
c) des moyens qui comparent les valeurs des deux matrices flexibles élastiques conservées en mémoire et
d) des moyens qui évaluent les écarts entre les deux matrices flexibles élastiques conservées en mémoire, les écarts permettant de conclure à la présence de dommages à la tête de palpage.

_FIG.1_

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4436507 A1
- EP 0693669 A
- DE 19518268 A1